**Europäisches Patentamt**

**European Patent Office**

**Office européen des brevets**

(19)

(11) Veröffentlichungsnummer : **0 231 822 B1**

(12)

# EUROPÄISCHE PATENTSCHRIFT

(45) Veröffentlichungstag der Patentschrift :
24.04.91 Patentblatt 91/17

(51) Int. Cl.$^5$ : **A01K 5/01**

(21) Anmeldenummer : **87100848.8**

(22) Anmeldetag : **22.01.87**

(54) **Rauhfuttertrog.**

(30) Priorität : **30.01.86 DE 3602828**

(43) Veröffentlichungstag der Anmeldung :
**12.08.87 Patentblatt 87/33**

(45) Bekanntmachung des Hinweises auf die
Patenterteilung :
**24.04.91 Patentblatt 91/17**

(84) Benannte Vertragsstaaten :
**AT BE CH ES FR GB LI NL**

(56) Entgegenhaltungen :
**CH-A- 667 368**
**DE-C- 209 668**
**DE-C- 272 626**

(73) Patentinhaber : **van Vught, Barbara**
**Höhenweg 28**
**W-8137 Berg-Sibichhausen (DE)**

(72) Erfinder : **van Vught, Barbara**
**Höhenweg 28**
**W-8137 Berg-Sibichhausen (DE)**

(74) Vertreter : **Kern, Ralf M., Dipl.-Ing.**
**Kern, Lang & Partner Patent- und**
**Rechtsanwaltsbüro Postfach 14 03 29**
**W-8000 München 5 (DE)**

EP 0 231 822 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

# Beschreibung

Die Erfindung betrifft einen Rauhfuttertrog für die Viehhaltung, insbesondere für die Pferdehaltung, mit einem Trog und einem Abdeckrost, der innerhalb des Trogs frei auf dessen Rauhfutterinhalt aufliegend angeordnet ist und mittels der Innenseite einer Seitenwand zugeordneten, zwischen der Oberseite und der Unterseite des Trogs verlaufenden stabförmigen, jeweils am oberen Ende gegebenenfalls mit einer Krümmung versehenen, Führungs-elementen bei seiner frei beweglichen Vertikalbewegung sowie durch eine lösbare Sperre innerhalb der Seitenwände des Trogs gehalten wird, wobei die nebeneinander auf Abstand zueinander liegenden Gitterstäbe des Abdeckrosts von der vorderen (Front-) Seitenwand zu dessen hinterem Bereich hin verlaufend, sowie als rundum geschlossene, die Führungselemente umschließende Öffnungen ausgebildete Führungseinrichtungen zur Führung des Abdeckrosts vorgesehen sind.

Bekannt sind Rauhfutterträge gemäß DE-PS 209668, die jedoch einerseits konstruktiv kompliziert ausgeführt sind und andererseits zu Funktionsstörungen, wie insbesondere zu Verklemmungen neigen, womit zwangsläufig eine erhebliche Panikgefahr und damit Verletzungsgefahr für die damit gefütterten Tiere (Pferde) verbunden ist.

Auch ein anderes am Beispiel eines Körner-Futtertrogs (DE-PS 272 626) bekanntes Funktionsprinzip mit auf dem Futter frei floatender Abdeckeinrichtung würde bei Verwendung für einen Rauhfuttertrog dem Nachteil unterliegen, daß der Abdeckrost aus der oberen Trogöffnung herausgerissen werden kann, womit eine erhebliche Verletzungsgefahr für die damit gefütterten Tiere verbunden ist. Auch sind die Stellungsmöglichkeiten des Abdeckrosts innerhalb des Trogs unbegrenzt, wobei das Tier teilweise nicht an alles Futter gelangt. Auch dadurch können sich Panikreaktionen des Tieres ergeben, wobei es sich verletzen kann.

Aufgabe der Erfindung ist die Schaffung eines Rauhfuttertrogs, dessen Funktions- bzw. Betriebssicherheit einerseits durch Verminderung seiner beweglichen Teile verbessert wird und bei dem andererseits eine Lagemöglichkeit des Abdeckrosts im Inneren des Futtertrogs auch in seitlicher Verlagerung oder Schräglage mit losem und freiem horizontalem Spiel möglich ist, um ein Verklemmen auszuschalten, ein Herausreißen des Abdeckrosts aus dem Trog aber unmöglich ist. Dabei sollen alle diese Aufgabenelemente zur absoluten Vermeidung von Verletzungen der mit dem Trog gefütterten Tiere dienen.

Demgemäß besteht die Erfindung aus einer Merkmälskombination für einen eingangs definierten Rauhfuttertrog mit den Merkmalen, daß die Öffnungen der Führungseinrichtungen unmittelbar im Abdeckrost und innerhalb dessen Seitenbegrenzungen angeordnet sind, und daß der Abdeckrost sowohl durch einen als gesondertes freies Spiel in Seitwärtsrichtung ausgebildeten horizontalen Abstand zwischen den Führungselementen und den Führungseinrichtungen als auch durch einen in allen Seitwärtsrichtungen zwischen seitlicher Begrenzung des Abdeckrosts und der Innenseite der Seitenwände des Trogs vorgesehenen freien Abstand innerhalb des Trogs in alle Seitwärtsrichtungen mit freiem Spiel bzw. verklemmungsfrei verlagerbar ist.

Mit den Merkmalen gemäß Ansprüchen 2 bis 4 ist der erfindungsgemäße Rauhfuttertrog zu optimaler Raumausnutzung, noch erhöhter Sicherheit und vereinfachter Bedienung ausgebildet.

Dabei gewährleistet der erfindungsgeäße freie Abstand der seitlichen Abdeckrost-Konturen von den Innenseiten der Seitenwände des Trogs ein beim Herauszupfen des Heus zwischen den Gitterrosten entstehendes seitliches Bewegungsspiel des Abdeckrosts, der auf diese Weise sich innerhalb des Trogs nicht verklemmen kann und auch bei jeder Bewegung weitere Heuhalme zum Herauszupfen des Heus freigibt. Sobald sich der Abdeckrost etwas schräg stellen sollte, werden vom Tier die noch höherliegenden Heupartien bevorzugt, so daß die Möglichkeit einer Schräg.stellung des Abdeckrosts wegen dieses zwangsläufigen Ausgleichs von selbst in einem bestimmten Rahmen bleibt, begrenzt ist. Die seitliche Spielbegrenzung zwischen Führungselement und Führungseinrichtung sorgt dabei dafür, daß der Abdeckrost bei Schräglage nicht zu stark in den dadurch erhöhten Abstand zwischen Rost- Seitenbegrenzung und Seitenwandinnenseite abrutschen kann. Insofern ist ein Zusammenspiel beider freier Abstände gegeben.

Dadurch, daß dem Tier beim erfindungsgeäßen Rauhfuttertrog nur jeweils wenige einzelne Rauhfutterhalme zum Herauszupfen freistehen, erfolgt auch ein gründlicheres Zerkauen des Futters, und zwar auch über eine längere Zeit hinweg und damit eine bessere, weniger kolikgefährdete Verdauung sowie Beschäftigung des Pferdes mit der Aufnahme des Rauhfutters.

Damit durch Hineintreten in den Trog keine Verletzungen auftreten, müsse die Gitterstäbe stabil genug sein, d.h. eine verbiegungsfeste Konstruktion besitzen, womit sie auch zugleich ein ausreichendes Gewicht gegen ein Anheben durch das Tier beim Zupfen des Heus aufweisen.

Andererseits müssen die seitlichen Abstände der einzelnen Gitterstäbe des Abdeckrosts bzw. die Form der freien Zugriffsöffnungen im Abdeckrost auf eine gleichmäßige Zugriffsfähigkeit durch das Maul des Tieres in allen Bereichen des Abdeckrosts abgestellt sein. Durch eine gleichmäßige Verteilung der Zugriffsöffnungen über die Trogfläche wird eine automatisch gleichmäßige Absenkung des Abdeckrosts innerhalb des Trogs gewährleistet.

Der Trog kann sowohl aus Holz als auch aus anderem Material bestehen. Bei Ausführung des Trog aus flüssigkeitsdichtem Material kann er eine Ablaufsöffnung aufweisen, so daß das eingefüllte Rauhgut nach oder vor Auflage des Abdeckrosts mit Wasser begossen oder getränkt werden kann, wodurch ein Waschen des Rauhfutters möglich ist, und zwar auch unter Zugabe von Zusatzen z.B. Kochsalz zum Wasser.

Insbesondere bei dreieckförmiger Ausbildung des erfindungsgemäßen Rauhfuttertrogs läßt sich dieser in einer Ecke des Stalls mit seinen Kathetenseiten an den angrenzenden Stallwänden fest anbringen, und zwar auch als Nachrüstung bestehender Ställe, wobei gleichzeitig eine raumsparende Anordnung gewährleistet ist, dabei lassen sich zusätzlich vorgesehene Einrichtungen zur höhenverstellbaren Anbringung des Trogs auf stabilste Weise verwirklichen.

Zudem kann bei einem dreieckigen Trog der Abdeckrost auch zum Hochklappen um einen seiner Seitenränder oder an einer seiner Ecken ausgeführt sein, um das Eintullen des Rauhfutters handhabungsgemäß zu erleichtern.

Nachstehend sind anhand von Zeichnungen bevorzugte Ausführungsformen des erfindungsgemäßen Rauhfuttertrogs näher beschrieben :

Es zeigt :

Fig. 1 eine schematische Darstellung eines erfingungsgemäßen aber nicht beanspruchten Rauhfuttertrogs in Draufsicht,

Fig. 2 eine Längsschnittdarstellung des Rauhfuttertrogs gemäß Fig. 1 längs der Schnittlinie I-I,

Fig. 3 eine schematisch wiedergegebene Draufsicht auf eine beanspruchte Ausführungsform des erfindungsgemäßen Rauhfuttertrogs bzw. seines Abdeckrosts,

Fig. 4 eine Längsschnittwiedergabe der Ausführungsform gemäß Fig. 3 längs der Schnittlinie II-II,

Fig. 5 eine abgewandelte Ausführungsform der Merkmale gemäß Fig. 4 in analoger Darstellung und die

Fig. 6a und 6b eine Seitenansicht bzw. Draufsicht auf eine am Abdeckrost des erfindungsgemäßen Rauhfuttertrogs vorgesehene Sperrklinke.

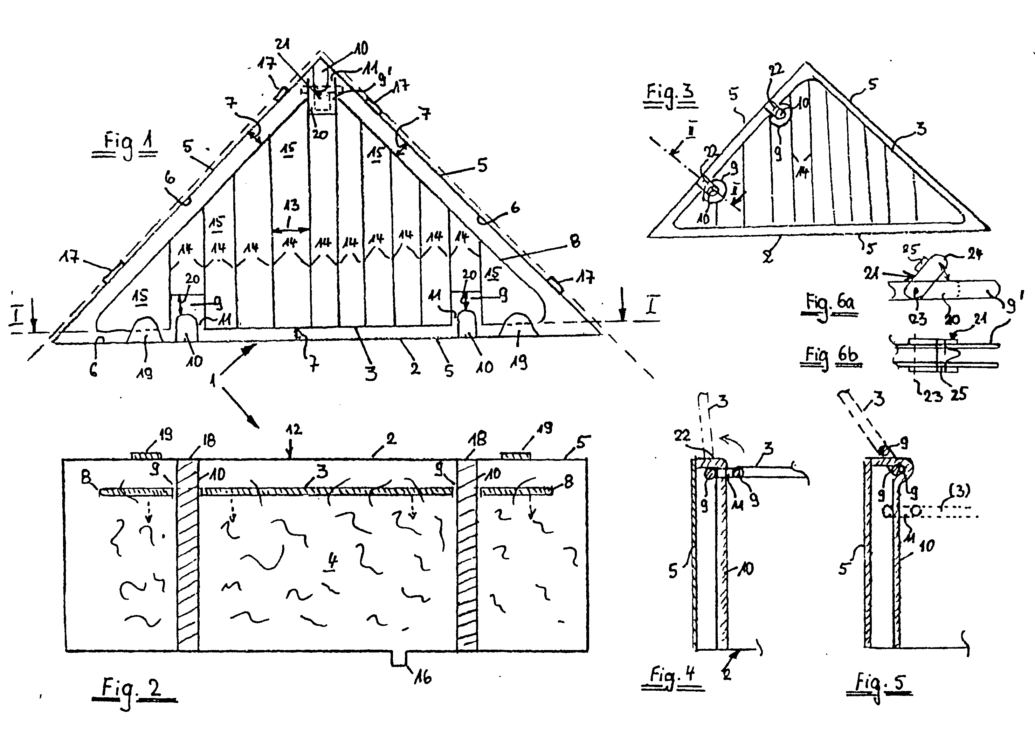

In einem in den Fig. 1 und 2 gezeigtem Rauhfuttertrog 1 ist innerhalb dessen Trogs 2 ein auf darin eingefülltem Rauhfutter 4 (Heu) frei aufliegender Abdeckrost 3 angeordnet, wobei zwischen den Innenseiten 6 der Seitenwände 5 des Trogs 2 und den seitlichen Begrenzungen 8 bzw. den seitlich äußeren Teilen des Abdeckrosts 3 ein freier Abstand 7 vorgesehen ist. Dieser freie Abstand 7 gewährleistet, daß sich der Abdeckrost 3 bei seinem allmählichen Absenken innerhalb des Trogs 2 nicht innerhalb des Trogs verklemmen kann, wenn das Heu von dem zu fütternden Tier durch Gitterstäbe 14 berausgezupft wird. Dabei sollte der vorzugsweise aus Stahl bestehende Abdeckrost 3 ein ausreichendes Gewicht besitzen, um nicht beim Herauszupfen des Heus aus der oberen Trogöffnung 12 herausgerissen zu werden.

Zusätzlich können zowohl am Abdeckrost 3 als auch an den Innenseiten 6 des Trogs 2 Einrichtungen 9 zur Höhen-Führung des Abdeckrosts 3 bzw. innerhalb des Trogs 2 Führungselemente 10 vorgesehen sein, zwischen denen ein horizontaler Abstand 11 vorhanden ist, welcher zum freien Spiel bei der Höhen-Führung des Abdeckrosts 3 dient, damit sich dieser nicht verklemmen kann.

Dieser Abstand 11 kann deutlich kleiner als der Abstand 7 sein, weil sich der Abdeckrost 3 bei weniger werdendem Heu gleichmäßig nach unten senkt, d.h. in geringerem Maße in eine gewsse Schräglage kommt.

Die seitlichen Abstände 13 der z.B. runden Gitterstäbe 14 können je nach Gattung der zu fütternden Tiere und auch nach der horizontalen Querschnittsform des Trogs 2 unterschiedlich sein, sind aber jedenfalls derart bemessen, daß Maul des Tieres das Heu zwischen ihnen bervorzupfen kann, und zwar gleichmäßig in allen Bereichen der Querschnittsform des Trogs 2. Bei nicht nur längs angeordneten Gitterstäben 14 gilt des Gleiche für sämtliche im Abdeckrost 3 vorgesehene Zugriffsöffnungen.

Bei Vorbandensein der Führungs-Eintichtungen 9 bzw. der Führungs-Elemente 10 kann der Abdeckrost 3 auch kleiner bemessen sein, wobei ein freier Abstand 7 zugleich auch als Zugriffsöffnung dient.

Die Führungs-Einrichtungen 9 verlaufen vom oberen Trogrand bis zu dessen Boden und besitzen am oberen Ende 18 einen Anschlag, so daß der Abdeckrost 3 nicht aus dem Trog 2 herausgerissen werden kann. Dieser Anschlag kann auch aus einer nach innen ragenden Schulter des Trogs 2 bestehen.

Der Abdeckrost 3 kann entweder aud dem Trog 2 herausnehmbar ausgebildet sein (zum Reinigen des Trogs 2 bzw. zum Nachfüllen des Heus) und/oder aber auch an einer Längsseite des Trogs 2 hochklappbar sein. Dafür können die Führungs-Einrichtungen 9 und die Führungs-Elemente 10 in ihren Abmessungen senkrecht zur Trogwand aufeinander abgestimmt sein, wobei auch ein zusätzliches Bewegungsspiel 20 vorgesehen ist, und/oder eine Sperrklinke 21 aufweisen, welche manuell hochgeschwenkt werden kann, um den Anschlag am oberen Ende der Führungs-Einrichtung 9 freizugeben.

Diese Sperrklinke 21 besitzt einen um eine Achse 23 schwenkbaren Hebel 24 sowie einen Anschlag 25, mittels dessen der Hebel 24 nicht nach unten schwenkbar ist.

Im Prinzip braucht nur ein einziges Paar von Führungs-Einrichtungen 9 bzw. Führungs-Elemente 10 vorgesehen sein, um die erfindungsgemäße Halterung des Abdeckrosts 3 im Trog 2 zu gewährleisten. Am einfachsten läßt sich dann die Führung in der dritten Trogecke als Metallseil oder als Kette ausführen, welche an der Unterkante der Trogecke befestigt ist und durch den Abdeckrost hindurchgreifend mit einem Karabinerhaken (Sicherheitshaken) an der oberen Ecke der Trogkante lösbar befestigt ist. Bei zwei oder drei Führungspaaren ist eine engere Führung gewährleistet.

Gemäß Fig. 4 bzw. 5 ist die Führungs-Einrichtung 9 als abgeschlossene Öffnung im Abdeckrost 3 ausgeführt, welche jeweils um ein stabförmiges, am oberen Ende gegebenenfalls mit einer Krümmung 22 versehenes, an der zugehörigen Seitenwand 5 des Trogs 2 befestigtes Führungs-Element 10 angeordnet ist. Auf diese Weise läßt sich der Abdeckrost 3 – wie gestrichelt dargestellt – hochklappen oder auch gemäß Fig. 5 sogar mit einem Überschlag. Das Hochklappen des Abdeckrosts 3 sollte vorzugsweise zu einer Boxenwand hin erfolgen.

Wenn die Führungs-Einrichtungen 9 bzw. die Führungs-Elemente 10 oder mindestens eine davon aus einem geräuschdampfenden Material bestehen oder damit beschichtet sind, wird ein Klappergeräusch des Abdeckrosts 3 in einem aus z.B. Metall hergestellten Trog 2 vermieden.

Zur Hohenverstellbarkeit des Trogs 2 können höhenverstellbare Befestigungen 17 des Trogs an der Stallwand vorgesehen sein.

Um das im Trog 2 zusammengedrückte bzw. zusammengedrängte Rauhfutter mit Wasser – auch mit Zusätzen wie Salz – benetzen bzw. tränken zu können, kann der Trog 2 flüssigkeitsdicht ausgebildet und mit einer verschließbaren Abflußöffnung 16 versehen sein. In der damit erleichterten Feuchtigkeitsbehandlung des Rauhfutters in zusammengedrückter Form liegt ein weiterer wesentlicher Vorteil des erfindungsgemäßen Rauhfuttertrogs.

**Ansprüche**

1. Rauhfuttertrog für die Viehhaltung, insbesondere für die Pferdehaltung, mit einem Trog (2) und einem Abdeckrost (3), der innerhalb des Trogs (2) frei auf dessen Rauhfutterinhalt aufliegend angeordnet ist und mittels der Innenseite (6) einer Seitenwand (5) zugeordneten, zwischen der Oberseite und der Unterseite des Trogs verlaufenden stabförmigen, jeweils am oberen Ende gegebenenfalls mit einer Krümmung versehenen, Führungselementen (10) bei seiner frei beweglichen Vertikalbewegung sowie durch eine lösbare Sperre (21) innerhalb der Seitenwände des Trogs (2) gehalten wird, wobei die nebeneinander auf Abstand zueinander liegenden Gitterstäbe (14) des Abdeckrosts (3) von der vorderen (Front-) Seitenwand zu dessen hinterem Bereich hin verlaufend, sowie als rundum geschlossene, die Führungselemente umschließende Öffnungen ausgebildete Führungseinrichtungen (9) zur Führung des Abdeckrosts (3) vorgesehen sind, dadurch **gekennzeichnet**, daß die Öffnungen der Führungseinrichtungen (9) unmittelbar im Abdeckrost (3) und innerhalb dessen Seitenbegrenzungen angeordnet sind, und daß der Abdeckost (3) sowohl durch einen als gesondertes freies Spiel in Seitwärtsrichtung ausgebildeten horizontalen Abstand (11) zwischen den Führungselementen (10) und den Führungseinrichtungen (9) als auch durch einen in allen Seitwärtsrichtungen zwischen seitlicher Begrenzung des Abdeckrosts und der Innenseite (6) der Seitenwände (5) des Trogs (2) vorgesehenen freien Abstand (7) innerhalb des Trogs in alle Seitwärtsrichtungen mit freiem Spiel bzw. verklemmungsfrei verlagerbar ist.

2. Rauhfuttertrog nach Anspruch 1, dadurch **gekennzeichnet**, daß der als freies Spiel vorgesehene horizontale Abstand (11) zwischen den Führungselementen (10) und den Führungseinrichtungen 19) und der freie Abstand (7) zwischen seitlicher Begrenzung des Abdeckrosts und den Innenseiten (6) der Seitenwände (5) des Trogs (2) derart bemessen sind, daß der Abdeckrost bei seitlicher Verschiebung allein von den Führungselementen geführt ist.

3. Rauhfuttertrog nach einem der vorhergehenden Ansprüche, dadurch **gekennzeichnet**, daß der Trog (2) dreieckförmig ausgebildet ist, wobei die Katheten entlang der Seitenwände der Ecke einer Tierhaltungsbox angeordnet sind und die Gitterstäbe (14) von der Hypothenuseite ausgehend und zu den Kathetenseiten hin verlaufen.

4. Rauhfuttertrog nach einem der vorhergehenden Ansprüche, dadurch **gekennzeichnet**, daß ein weiteres Führungselement (10) aus einem Seil (z.B. auch aus Metall) oder einer Kette besteht, welche mit einem Ende bzw. welche die der Unterkante des zugehörigen Trogbereichs angebracht und durch den Abdeckrost (3) hindurch greifend mit einem Karabinerhaken bzw. einem Sicherheitshaken aus der zugehörigen oberen Ecke des Trogs lösbar befestigt ist.

5. Rauhfuttertrog nach einem der vorhergehenden Ansprüche, dadurch **gekennzeichnet**, daß der Abdeckrost (3) in der Krümmung am oberen Ende jedes Führungselements mit einem Überschlag hochklappbar ist.

**Revendications**

1. Auge pour fourrage grossier, pour l'exploitation du bétail, en particulier pour l'exploitation du cheval, comportant une auge (2) et une grille de protection (3), qui est, à l'intérieur de l'auge (2), disposée de façon à reposer librement sur le fourrage grossier qui y est continu, et qui, est maintenue dans son déplacement vertical grâce à des éléments de guidage (10) en forme de barres, dont chacune est éventuellement pourvue d'une courbure en son extrémité supérieure, ces éléments courant entre le côté supérieur et le côté inférieur de l'auge et étant affectés au côté intérieur (6) d'une paroi latérale (5), de même que par un cliquet amovible (21), à l'intérieur des parois latérales de l'auge (2), auquel cas les barres (14) de la grille de protection (3), qui se trouvent les unes à côté des autres à distance les unes des autres, sont prévues de façon à courir de la paroi latérale frontale (avant) jusqu'à sa zone arrière, et aussi comme des dispositifs de guidage (9) destinés à guider la grille de protection (3), dispositifs qui sont conçus comme des ouvertures, entièrement fermées, et qui entourent les éléments de guidage, caractérisée en ce que les ouvertures des dispositifs de guidage (9) sont disposées directement dans la grille de protection (3) et à l'intérieur de ses limitations latérales, et que la grille de protection (3) peut se déplacer à l'intérieur de l'auge dans toutes les directions latérales, avec un jeu libre ou sans coincement, tant sur une distance horizontale (11), conçue comme un jeu libre distinct dans la direction latérale, entre les éléments de guidage (10) et les dispositifs de guidage (9), que sur une distance libre (7), prévue dans toutes les directions latérales entre la limitation latérale de la grille de protection et le côté intérieur (6) des parois latérales (5) de l'auge (2).

2. Auge pour fourrage grossier selon la revendication 1, caractérisée en ce que la distance horizontale (11) prévue comme jeu libre, entre les éléments de guidage (10) et les dispositifs de guidage (9), de même que la distance libre (7) entre la délimitation latérale de la grille de protection et les côtés intérieurs (6) des parois latérales (5) de l'auge (2), sont dimensionnées de façon que la grille de protection puisse, lors d'un déplacement latéral, être guidée uniquement par les éléments de guidage.

3. Auge pour fourrage grossier selon l'une des revendications précédentes, caractérisée en ce que l'auge (2) a la forme d'un triangle, les côtés de l'angle droit étant disposés le long des murs latéraux du coin d'un box recevant un animal, les barres (14) partant de l'hypoténuse et étant dirigées vers les côtés de l'angle droit.

4. Auge pour fourrage grossier selon l'une des revendications précédentes, caractérisée en ce qu'un élément de guidage supplémentaire (10) est constitué d'un câble (par exemple métallique) ou d'une chaîne qui, par une extrémité, est fixé, de façon à pouvoir être détaché du coin supérieur correspondant de l'auge, et avec un mousqueton ou un crochet de sécurité, en traversant la grille de protection (3) et en étant appliquée contre l'arête inférieure de la zone correspondante de l'auge.

5. Auge pour fourrage grossier selon l'une des revendications précédentes, caractérisée en ce que la grille de protection (3), dans la courbure située à l'extrémité supérieure de chaque élément de guidage, peut être rabattue vers le haut, avec un recouvrement.

## Claims

1. Manger for keeping animals, especially keeping horses, comprising a trough (2) and a cover grating (3), which is disposed inside the trough (2) resting freely on its fodder content and which is held, in its freely movable vertical motion, by means of bar-shaped guide elements (10) associated with the inner face (6) of a side wall (5) and extending between the upper side and loiter side of the trough and each optionally provided at the top end with a curve, and is held by a releasable stop (21) inside the side walls of the trough (2), wherein the grating bars (14) of the cover grating (3), spaced at intervals from one another, are provided extending from the forward (front) side wall to its rear region and guide devices (9), constructed as fully closed openings surrounding the guide elements, are provided for guidance of the cover grating (3), characterized in that the openings of the guide devices (9) are disposed directly in the cover grating (3) and within its lateral limits, and that the cover grating (3) is displaceable within the trough in all sidewards directions with free play and free of jamming both as a result of a horizontal spacing (11) between the guide elements (10) and the guide devices (9), formed as a separate free play in the sidewards direction, and also as a result of a clear spacing (7) provided in all sidewards directions between a lateral boundary of the cover grating and the inner face (6) of the side walls (5) of the trough (2).

2. Manger according to Claim 1, characterised in that the horizontal spacing (11), provided as free play, between the guide elements (10) and the guide devices (9) and the clear spacing (7) between a lateral boundary of the cover grating and the inner faces (6) of the side walls (5) of the trough (2), are so designed that the cover grating is guided solely by the guide elements when lateral displacement occurs.

3. Manger according to one of the preceding Claims, characterized in that the trough (2) is of triangular shape, the shorter sides being disposed along the side walls of the corner of an animal stall and the grating bars (14) extending from the hypotenuse to the shorter sides.

4. Manger according to one of the preceding Claims, characterised in that a further guide element (10) consists of a rope (e.g. including of metal) or a chain, which is fitted by one end or is fitted to the lower edge of the associated trough region and, passing through the cover grating (3), is releasably secured by a snap hook or safety hook to the associated upper corner of the trough.

5. Manger according to one of the preceding Claims, characterized in that the cover grating (3) can be folded up and over in the curve at the top end of the guide element.

Fig. 3

Fig. 6a

Fig. 6b

Fig. 5

Fig. 4

Fig. 1

Fig. 2